# EUROPÄISCHE PATENTSCHRIFT

(11) **EP 1 738 939 B1**
(45) Veröffentlichungstag und Bekanntmachung des Hinweises auf die Patenterteilung: **24.03.2010**
(21) Anmeldenummer: 06008257.5
(22) Anmeldetag: 21.04.2006
(51) Int. Cl.: B60G 3/20

(54) **Unabhängige Radaufhängung für die Hinterräder von Kraftfahrzeugen**
Independent wheel suspension for the rear wheels of motor-vehicles
Suspension à roue indépendante pour les roues arrières de véhicules à moteur

(30) Priorität: 01.07.2005 DE 102005030810
(43) Veröffentlichungstag der Anmeldung: 03.01.2007
(73) Patentinhaber: AUDI AG, 85045 Ingolstadt (DE)
(72) Erfinder: Schmidt, Walter, 86643 Rennertshofen (DE); Müller, Hugo, 86701 Rohrenfels-Ballersdorf (DE); Brandl, Hans Jürgen, 86706 Weichering (DE); Killian, Friedrich, 85122 Hitzhofen (DE)
(74) Vertreter: Asch, Konrad

(56) Entgegenhaltungen:
- EP-A- 0 287 094
- EP-A- 0 288 654
- DE-A1- 10 221 993
- US-A1- 2002 043 780

## Beschreibung

Die Erfindung betrifft eine unabhängige Radaufhängung für die Hinterräder von Kraftfahrzeugen gemäß dem Oberbegriff des Patentanspruches 1.

Eine derartige Radaufhängung zeigt beispielsweise die EP 0 288 654 B1, die auch als Trapezlenkerachse bezeichnet wird. Die nicht dargestellte Tragfeder und der Teleskop-Stoßdämpfer sind in der Regel am Radträger und/oder am unteren Lenker bzw. Trapezlenker abgestützt. Ferner ist der untere Trapezlenker über zwei Lenkerlager mit dem Radträger verbunden, deren verlängerte Schwenkachse nach Art eines Schräglenkers sich mit der Schwenkachse der aufbauseitigen Lenkerlager in Fahrtrichtung des Kraftfahrzeuges gesehen vor der Radaufhängung schneidet. In der oberen Lenkerebene sind des weiteren zwei Lenker am Radträger angelenkt, von denen der vordere Lenker aufgrund seiner räumlichen Anordnung ein definiertes, elastokinematisches Eigenlenkverhalten der Radaufhängung mit bevorzugter Untersteuertendenz beim Durchfahren von Kurven bewirkt.

Aus der DE 102 21 993 A1 ist eine Radaufhängung für ungelenkte Räder von Kraftfahrzeugen bekannt, die ohne die Verwendung einer Koppel eine gezielte Elastokinematik mit einem günstigen Vorspurverhalten und eine robuste, baulich vorteilhafte Konstruktion aufweisen soll. Hierzu schlägt die DE 102 21 993 A1 vor, die besagte Lagerstelle durch zwei in sich verschachtelte Lager auszubilden, von denen das mit dem Querlenker zusammenwirkende Lager ein Torsionslager und das mit dem Radträger zusammenwirkende Lager ein Schub-/Drucklager ist, wobei letzteres in Querrichtung auf Schub und in Hochrichtung auf Druck belastet ist.

Aufgabe der Erfindung ist es, eine Radaufhängung der gattungsgemäßen Art anzugeben, die bei einer baulich günstigen Anordnung der Funktionsteile zueinander und im Kraftfahrzeug eine besonders schwingungsresistente und im gesamten Belastungsspektrum zuverlässige Geradführung der Räder mit definierten elastokinematischen Eigenschaften sicherstellt.

Diese Aufgabe wird erfindungsgemäß mit den Merkmalen des Patentanspruches 1 gelöst. Vorteilhafte Weiterbildungen der Erfindung sind den weiteren Patentansprüchen entnehmbar.

Erfindungsgemäß wird eine unabhängige Radaufhängung für die Hinterräder von Kraftfahrzeugen vorgeschlagen, mit einem Radträger, der an zumindest einem oberen und an einem unteren Querlenker angelenkt ist, wobei der untere Querlenker über jeweils zwei im Wesentlichen horizontale Schwenkachsen bildende Lenkerlager am Aufbau des Kraftfahrzeuges und am Radträger angelenkt ist und ein Lenkarm des Radträgers mit einem weiteren Lenker verbunden ist. Ferner ist eine am Aufbau und am Radträger abgestützte Tragfeder und ein im Wesentlichen vertikal ausgerichteter Teleskopstoßdämpfer vorgesehen. In der Draufsicht auf die Radaufhängung gesehen ist der weitere, insbesondere als Spurstange wirkende Lenker in der unteren Lenkerebene und schräg von außen nach innen in Fahrtrichtung nach vorne derart geneigt angeordnet, dass der Schnittpunkt von gedachten Verlängerungen des weiteren Lenkers und von in Fahrtrichtung gesehen hinteren Lagerpunkten des unteren Lenkers hinter der verlängerten Radmittelachse liegt. Diese Anordnung bewirkt zunächst ein vorteilhaftes Eigenlenkverhalten der Radaufhängung sowohl bei auf das Rad wirkenden Längskräften (z. B. Bremsvorgang) als auch bei Seitenkräften (beim Durchfahren von Kurven am kurven-äußeren Rad) in Richtung Vorspur bzw. untersteuern, wobei das Ausmaß der Spuränderungen durch die Pfeilung des weiteren Lenkers relativ zu den besagten Lenkerlagern in einfacher Weise definierbar ist. Ferner führt die Lage des weiteren Lenkers in der unteren Lenkerebene zu einer Entkopplung von Vorspur und Sturz des Rades und vermeidet somit ein unerwünschtes Mitlenken des Rades bei aus Durchfederbewegungen bewirkten Sturzänderungen. Schließlich ermöglicht die Anordnung des weiteren Lenkers in der unteren Lenkerebene eine besonders günstige Anbindung am Aufbau oder an einem Längsholm eines Hilfsrahmens des Kraftfahrzeuges mit einem harmonischeren (weniger verwinkelten) Verlauf des Längsholmes mit gegebenenfalls günstigerem Verformungsverhalten in einem Crashfall.

Des Weiteren kann das Eigenlenkverhalten der Radaufhängung in einfacher Weise gezielt dadurch verstärkt werden, dass die hinteren gummielastischen Lager des unteren Lenkers bzw. Trapezlenkers mit größerer Federhärte als die vorderen gummielastischen Lager ausgebildet sind. Durch die damit verbundene, größere Nachgiebigkeit der vorderen Lenkerlager wird das elastokinematische Einlenken der Räder in Richtung Vorspur bei Längs- und Seitenkräften auf die Räder weiter unterstützt. Dabei sollte bevorzugt zumindest das äußere vordere Lenkerlager des unteren Lenkers näher zur Radmittenachse als die hinteren Lager positioniert sein, so dass sich ein größerer wirksamer Hebelarm bei den besagten Längs- und Seitenkräften auf den Radträger einstellt.

In besonders vorteilhafter Weiterbildung der Erfindung kann die Tragfeder zwischen dem unteren Lenker und dem weiteren Lenker vor der Radmitte positioniert und an einem in der unteren Lenkerebene oder darunter an dem Radträger angeordnetem Ausleger abgestützt sein. Die Tragfeder, die bevorzugt eine etwa zylindrische Schraubendruckfeder oder eine Luftfeder sein kann, kann dadurch unter Aufrechterhaltung der notwendigen Bodenfreiheit des Kraftfahrzeuges tief nach unten verlegt werden und somit im Bereich des Gepäckraumes oder Laderaumes Nutzraum bzw. Durchladebreite freigeben; gegebenenfalls ansonsten erforderliche Federdome können kleinvolumiger ausgeführt sein oder ganz entfallen. Dabei ist auch vorteilhaft, dass durch das erzielbare Übersetzungsverhältnis der Tragfeder von <1 die Tragfeder an sich weniger Bauraum beanspruchen kann. Durch die Anbindung der Tragfeder vor Mitte Rad und direkt am Radträger ist eine definierte Vorspannung des Radträgers in Drehrichtung des Rades bei Vorwärtsfahrt über den gesamten Federweg gegeben. Auch bei Auftreten von Längskräften (z. B. Überfahren von Hindernissen) ändert diese Vorspannung nicht ihre Richtung. Damit gibt es keinen "Nulldurchgang" der Vorspannung des Radträgers über den gesamten Federweg, was sich günstig auf den Komfort der Radaufhängung (Abrollkomfort, Schwingungsverhalten) auswirkt.

Baulich und herstellungstechnisch günstig kann der Ausleger durch zwei an die Lageraufnahmen für den unteren Lenker angeformte und zu einer Federaufnahme zusammen geführte Streben gebildet sein.

Ferner kann der Ausleger in der Draufsicht gesehen nach vorne und der Fahrzeuglängsmitte zu verlaufen, derart, dass die etwa vertikale Federlängsachse zwischen den beiden Schwenkachsen des unteren Lenkers positioniert ist. Bevorzugt kann die gesamte Querschnittsfläche der Tragfeder zwischen den besagten Schwenkachsen positioniert sein.

Zudem kann zur Erzielung einer kompakten, bauraumgünstigen Konstruktion der Radaufhängung der untere Lenker und/oder der weitere Lenker zur Herstellung eines ausreichenden Freiganges der dazwischen angeordneten Tragfeder im Bereich der Tragfeder entsprechend bogenförmig gestaltet sein.

Eine weitere, besonders vorteilhafte Ausgestaltung der Erfindung sieht vor, dass der Teleskop-Stoßdämpfer mit einer bei stärkerem Durchfedern des Rades wirksam werdenden Zusatzfeder versehen ist und hinter der Radmittelachse ebenfalls am Radträger angelenkt ist. Diese Anordnung bewirkt einen günstigen Einfluss auf den Verlauf der Vorspurkurve der Radaufhängung insbesondere bei wirksam werdender Zusatzfeder bei starkem Durchfedern des Rades. Dabei entsteht ein der Vorspannung der Tragfeder entgegenwirkendes Moment am Radträger, das den Radträger im elastokinematischen Bereich entgegen der Drehrichtung des Rades bei Vorwärtsfahrt verdreht, wobei der weitere, untere Lenker bzw. Spurstange den Radträger in Richtung exakte Geradeausfahrt des Rades korrigiert. Dies bewirkt, dass bei einem starken Durchfedern des Rades (z. B. bei welliger Fahrbahn) insgesamt an der Radaufhängung kein unerwünschtes Eigenlenken auftritt

Bevorzugt ist dabei der Stoßdämpfer im Bereich des Auslegers des Radträgers unterhalb der Radmitte angelenkt.

Die beschriebene Überlagerungsfunktion des Stoßdämpfers mit der Ersatzfeder auf das Eigenlenkverhalten der Radaufhängung kann in einfacher Weise dadurch weiter verstärkt werden, dass der Stoßdämpfer zwischen 5 bis 25 Grad, insbesondere ca. 15 Grad, nach oben vorne geneigt angeordnet ist.

Dabei kann der Stoßdämpfer baulich besonders günstig in der Seitenansicht gesehen vor dem äußeren, hinteren Lenkerlager des unteren Lenkers und des oberen Lenkers verlaufen und somit vorteilhaft in die vorgegebene Peripherie der Radaufhängung integriert sein.

Schließlich können bei angetriebenen Rädern des Kraftfahrzeuges die Tragfeder und der Stoßdämpfer beiderseits der jeweiligen Antriebswelle positioniert sein.

Zwei Ausführungsbeispiele der Erfindung sind im folgenden mit weiteren Einzelheiten näher erläutert. Die schematische Zeichnung zeigt in:
- **Fig. 1**: eine Draufsicht auf eine Radaufhängung für die Hinterräder von Kraftfahrzeugen, mit einem oberen Lenker, einem unteren Trapezlenker, einem weiteren unteren Lenker, einer Tragfeder und einem Teleskop-Stoßdämpfer;
- **Fig. 2**: die Radaufhängung gemäß Fig. 1 in einer Seitenansicht;
- **Fig. 3**: den Radträger der Radaufhängung nach den Fig. 1 und 2, in einer raumbildlichen Ansicht schräg von oben innen; und
- **Fig. 4**: in Draufsicht die untere Lenkerebene einer weiteren Radaufhängung gemäß den Fig. 1 bis 3, jedoch ohne am Radträger abgestützter Tragfeder und Teleskop-Stoßdämpfer.

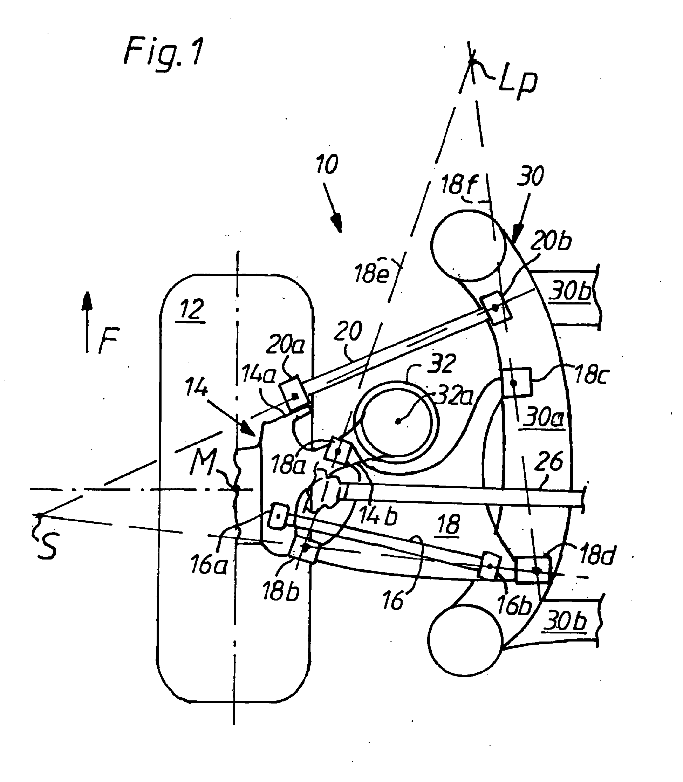

In den **Fig. 1 bis 3** ist eine linksseitige Radaufhängung 10 für die Hinterräder 12 von Kraftfahrzeugen dargestellt, die sich im wesentlichen aus einem Radträger 14, einem oberen einzelnen Lenker 16, einem unteren Trapezlenker bzw. Lenker 18, einem weiteren, einzelnen Lenker 20, einer durch eine Schraubendruckfeder gebildeten Tragfeder 32 und einem im wesentlichen vertikal ausgerichteten Teleskop-Stoßdämpfer 34 zusammensetzt. Die rechtsseitige Radaufhängung ist sich spiegelbildlich gleich vorzustellen. Ferner ist die Vorwärts-Fahrtrichtung des Kraftfahrzeuges mit dem Pfeil F angezeigt.

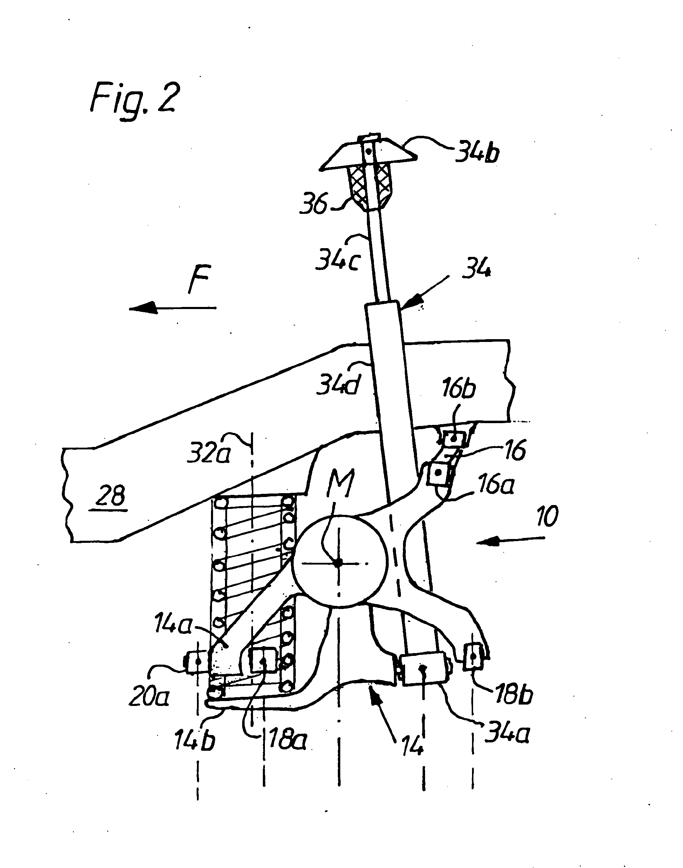

Der Radträger 14 - in dem das über eine nicht näher dargestellte Antriebswelle 26 angetriebene Hinterrad 12 drehbar gelagert ist - ist in einer oberen Lenkerebene (vgl. **Fig. 2**) über den Lenker 16 mit Lenkerlagern 16a, 16b und in einer unteren Lenkerebene mittels des Lenkers 18 über Lenkerlager 18a, 18b und 18c, 18d und schließlich über den weiteren Lenker 20 über Lenkerlager 20a, 20b im Sinne einer Geradführung geführt.

Die Lenkerlager 16a, 18a, 18b, 20a sind in noch zu beschreibender Weise am Radträger 14 einerseits und am Aufbau des Kraftfahrzeuges bzw. im Ausführungsbeispiel an einem am Aufbau befestigten, nur teilweise dargestellten Hilfsrahmen 30 andererseits in üblicher Weise zur Bildung von Schwenklagern angeordnet. Die besagten Lenkerlager können bekannte Gummi-Metall-Hülsenlager und teilweise gegebenenfalls Kugelgelenke sein. Der Hilfsrahmen 30 weist je Seite des Kraftfahrzeuges einen Längsholm 30a und diese miteinander rahmenförmig verbindende Querholme 30b auf, wobei die aufbauseitigen, unteren Lenkerlager 18c, 18d, 20b an dem dargestellten Längsholm 30a angeordnet sind.

Aus der Seitenansicht **Fig. 2** ist ersichtlich, dass die Lenkerlager 16a und 18b des oberen Lenkers 16 und des unteren Lenkers 18 im wesentlichen vertikal übereinander und deutlich hinter der Raddrehachse M liegen und somit quasi eine Lenkachse der Radaufhängung 10 bilden. Hingegen liegen die Lenkerlager 18a, 18c vor der Radmittenachse M, wobei das äußere Lenkerlager 18a näher zur Radmittenachse M liegt als die hinter dieser liegenden, äußeren Lenkerlager 18b, 16a.

Wie aus **Fig. 1** **und** **Fig. 2** ersichtlich ist, ist der weitere, in der unteren Lenkerebene mit dem Lenker 18 angeordnete Lenker 20 über einen Lenkarm 14a am Radträger 14 angelenkt und verläuft von außen (Lenkerlager 20a) nach innen (Lenkerlager 20b) schräg nach vorne. Das Lenkerlager 20a liegt dabei noch weiter vor der Radmittenachse M als das Lenkerlager 18a.

Die räumliche Anordnung der Lenkerlager 18b, 18d und der Lenkerlager 20a, 20b ist zudem so gewählt, dass deren gedachte Verlängerungen (gestrichelte Linien) einen Schnittpunkt S bilden, der wie aus **Fig. 1** ersichtlich außerhalb des Hinterrades 12 und hinter der Raddrehachse M liegt.

Eine Seitenkraft oder eine Längskraft auf das Hinterrad 12 erzeugt somit im elastokinematischen Bereich der Radführung 10 ein Einlenken des Hinterrades 12 in Richtung Vorspur bzw. ein untersteuerndes Fahrverhalten des Kraftfahrzeuges. Zur Unterstützung dieser Untersteuertendenz sind des weiteren die hinter der Radmittenachse M liegenden Lenkerlager 18b, 18d (oder eines davon) in ihrer Federrate härter ausgebildet als die vor der Radmittenachse M liegenden Lenkerlager 18a, 18c, während die Lenkerlager 20a, 20b des als Spurstange wirkenden Lenkers 20 wiederum härter ausgelegt sind.

Die beiden radträgerseitigen Lenkerlager 18a, 18b und die beiden aufbauseitigen Lenkerlager 18c, 18d bilden wie wiederum aus **Fig. 1** ersichtlich Schwenkachsen 18e, 18f (gestrichelt dargestellt), deren gedachte Verlängerungen in Fahrtrichtung F des Kraftfahrzeuges vorne zu einem Längspol L_{P} zusammenlaufen. Da die Lenkerlager 20a, 20b außerhalb dieser Schwenkachsen 18e, 18f positioniert sind, lässt sich über den quasi als Spurstange wirkenden Lenker 20 ein definiertes Eigenlenkverhalten der Radaufhängung 10 bzw. eine definierte Vorspurkurve des Hinterrades 12 aufprägen.

Zwischen dem unteren, vorderen Lenker 20 und dem trapezförmigen Lenker 18 ist die Tragfeder 32 der Radaufhängung 10 einerseits am Aufbau bzw. an einem Längsträger 28 und andererseits am Radträger 14 abgestützt. Die Tragfeder 32 ist eine im wesentlichen zylindrisch ausgeführte Schraubendruckfeder mit einer vertikal ausgerichteten Längsachse 32a.

Die Tragfeder 32 ist über einen nach unten und innen geführten und am Radträger 14 angeformten Ausleger 14b abgestützt, wobei wie ersichtlich deren Längsachse 32a deutlich vor der Radmittenachse M und der Ausleger 14b an sich unterhalb dieser Radmittenachse M liegt. Dies ermöglicht unter Beachtung der erforderlichen Bodenfreiheit des Kraftfahrzeuges eine besonders tiefe Anordnung der Tragfeder 32 mit Abstützung am Längsträger 28. Durch die Anordnung der Tragfeder 32 vor der Radmittenachse M übt die Tragfeder 32 eine in Drehrichtung des Hinterrades 12 bei Vorwärtsfahrt wirkende Vorspannung auf den Radträger 14 aus.

Aufgrund der räumlichen Anordnung des Auslegers 14b in der Draufsicht gesehen nach vorne und der Fahrzeuglängsmitte zu ist die Tragfeder 32 zudem so positioniert, dass deren etwa vertikale Federlängsachse 32a bzw. deren gesamte Querschnittsfläche zwischen den beiden gedachten Verlängerungen der Schwenkachsen 18e, 18f des unteren Lenkers 18 positioniert ist. Dazu ist ferner wie ersichtlich der untere Lenker 18 zum Freigang der dazwischen angeordneten Tragfeder 32 im Bereich der Tragfeder 32 entsprechend bogenförmig gestaltet.

Da die Tragfeder 32 näher zu der nicht eingezeichneten Momentandrehachse der Radaufhängung 10 positioniert ist als die Radmitte M, ist die Federübersetzung <1; das heißt, das die Tragfeder 32 bei entsprechend angepasster Federrate kürzer bauen kann.

An dem Radträger 14 ist des weiteren ein Teleskop-Stoßdämpfer 34 über ein Lager 34a schwenkbar angelenkt, der anderseits über ein Dämpferlager 34b bekannter Bauart am Aufbau des Kraftfahrzeuges (nicht dargestellt) angelenkt ist.

Der Stoßdämpfer 34 ist wie aus **Fig. 2** ersichtlich über das Lager 34a deutlich hinter der Radmittenachse M und unterhalb dieser am Radträger 14 angelenkt. Ferner ist der Stoßdämpfer 34 nach oben vorne 15 Grad gegenüber einer Senkrechten geneigt angeordnet.

Um die Kolbenstange 34c des Stoßdämpfers 34 herum ist eine durch einen gummielastischen Anschlagpuffer 36 gebildete Zusatzfeder angeordnet, die bei einem starken Durchfedern des Hinterrades 12 am Zylinderrohr 34d des Stoßdämpfers 34 zum Anschlag kommt und die Gesamtfederrate der Radaufhängung 10 erhöht.

Durch den hinter der Radmittenachse M liegenden Lagerpunkt des Lagers 34a des Stoßdämpfers 34 erzeugt die Zusatzfeder 36 ein der Vorspannung durch die Tragfeder 32 entgegenwirkendes Moment, das je nach Auslegung der Federrate der Zusatzfeder 36 eine mehr oder minder starke Spurkorrektur im elastokinematischen Bereich der Radaufhängung 10 herstellt.

Gegebenenfalls kann auch innerhalb der Tragfeder 32 eine weitere Zusatzfeder 36 in Form eines Anschlagpuffers vorgesehen sein, die dann zusätzlich an dem Ausleger 34b des Radträgers 14 bei einem starken Durchfedern des Hinterrades 12 zum Anschlag käme und eine weitere Vorspannkraft auf den Radträger 14 ausüben könnte. Die Federraten der beiden Zusatzfedern 36 könnten gegebenenfalls gezielt aufeinander abgestimmt sein, wobei bevorzugt die Zusatzfeder 36 am Stoßdämpfer 34 härter als die Zusatzfeder 36 der Tragfeder 32 ausgelegt sein sollte.

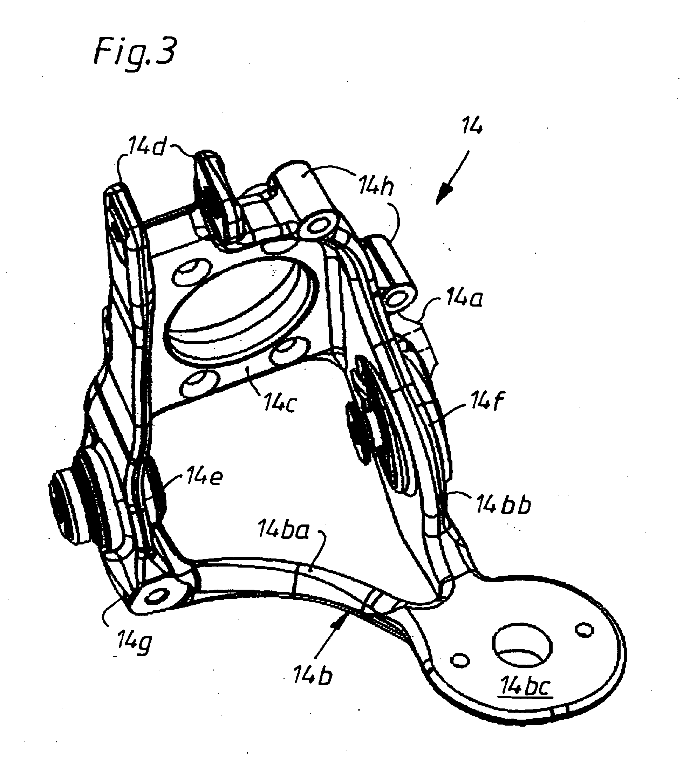

In der **Fig. 3** ist der Radträger 14 in einer raumbildlichen Ansicht von oben innen dargestellt. Wie ersichtlich ist, ist der die Drehlagerung (nicht dargestellt) des Hinterrades 12 aufnehmende Basisabschnitt 14c des Radträgers 14 mit Lageraufnahmen 14d, 14e, 14f versehen, an denen die Lenkerlager 16a, 18a und 18b anschließbar sind. Der Ausleger 14b zur Abstützung der Tragfeder 32 ist an die unteren, ringförmigen Lageraufnahmen 14e, 14f der Lenkerlager 18a, 18b angeformt und setzt sich aus zwei Streben 14ba, 14bb zusammen, die mit einer unteren, scheibenförmigen Federaufnahme 14bc den Ausleger 14b bilden. Die Federaufnahme 14bc des Auslegers 14b kann gegebenenfalls unmittelbar zu dem die Tragfeder 32 aufnehmenden, unteren Federteller ausgebildet sein.

Ferner sind an den Radträger 14 der Lenkarm 14a (in der dargestellten Ansicht fast verdeckt) und ein Befestigungsauge 14g angeformt. Das Befestigungsauge 14g ist an die Lageraufnahme 14e angeformt und dient zur Anbindung des Lagers 34a des Stoßdämpfers 34. Zwei weitere Befestigungsaugen 14h am Basisabschnitt 14c dienen zur Befestigung eines nicht dargestellten Bremssattels der Scheibenbremse des Kraftfahrzeuges.

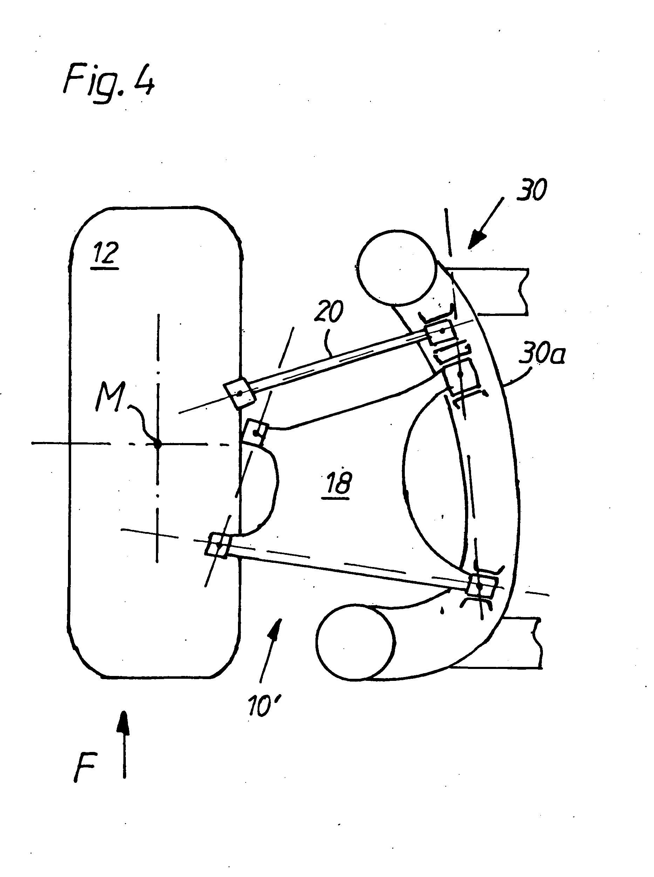

In der **Fig. 4** ist ein weiteres Ausführungsbeispiel der Erfindung dargestellt, das nur soweit erläutert ist, als es sich wesentlich von der Radaufhängung 10 gemäß den Fig. 1 bis 3 unterscheidet. Gleiche Teile sind mit gleichen Bezugszeichen versehen.

Die **Fig. 4** zeigt die untere Lenkerebene einer Radaufhängung 10' mit einem unteren, trapezförmigen Lenker 18 und einem weiteren, vorderen Lenker 20, die wie vorbeschrieben an dem Radträger 14 (nicht dargestellt) und aufbauseitig an dem Längsholm 30a des Hilfsrahmens 30 angelenkt sind.

Abweichend zu den Fig. 1 bis 3 sind die Tragfeder 32 und der Stoßdämpfer 34 mit der Zusatzfeder 36 nicht wie vorbeschrieben angeordnet. So ist die Tragfeder 32 an dem Lenker 18 abgestützt (nicht dargestellt). Der Stoßdämpfer 34 ist ebenfalls am Lenker 18 (gegebenenfalls in der Ausführung als Federbein) oder alternativ am Radträger 14 abgestützt.

## Patentansprüche

1. Unabhängige Radaufhängung für die Hinterräder von Kraftfahrzeugen, mit einem Radträger (14), der an zumindest einem oberen und an einem unteren Querlenker (18) angelenkt ist, wobei der untere Querlenker (18) über jeweils zwei im wesentlichen horizontale Schwenkachsen bildende Lenkerlager am Aufbau des Kraftfahrzeuges und am Radträger (14) angelenkt ist und ein Lenkarm (14a) des Radträgers (14) mit einem weiteren Lenker (20) verbunden ist, ferner mit einer am Aufbau und am Radträger abgestützten Tragfeder (32) und einem im wesentlichen vertikal ausgerichteten Teleskop-Stoßdämpfer (34), wobei in der Draufsicht gesehen der weitere Lenker (20) in der unteren Lenkerebene und schräg von außen nach innen in Fahrtrichtung nach vorne geneigt angeordnet ist, **dadurch gekennzeichnet, dass** der Schnittpunkt (S) von gedachten Verlängerungen des weiteren Lenkers (20) und von in Fahrtrichtung gesehen hinteren Lagerpunkten (18b, 18d) des unteren Lenkers (18) hinter der verlängerten Radmittelachse (M) liegt.

2. Radaufhängung nach Anspruch 1, **dadurch gekennzeichnet, dass** die hinteren gummielastischen Lager (18b, 18d) des unteren Lenkers (18) mit größerer Federhärte als die vorderen gummielastischen Lager (18a, 18c) ausgebildet sind.

3. Radaufhängung nach den Ansprüchen 1 und 2, **dadurch gekennzeichnet, dass** das vordere, äußere Lager (18a) des unteren Lenkers (18) näher zur Radmittenachse (M) als die hinteren Lager (18b, 18d) positioniert ist.

4. Radaufhängung nach einem oder mehreren der vorhergehenden Ansprüche, **dadurch gekennzeichnet, dass** die Tragfeder (32) zwischen dem unteren Lenker (18) und dem weiteren Lenker (20) vor der Radmitte (M) positioniert und an einem in der unteren Lenkerebene oder darunter an dem Radträger (14) angeordnetem Ausleger (14b) abgestützt ist.

5. Radaufhängung nach Anspruch 4, **dadurch gekennzeichnet, dass** der Ausleger (14b) durch zwei an die Lageraufnahmen (14e, 14f) für den unteren Lenker (18) angeformte und zu einer Federaufnahme (14bc) zusammen geführte Streben (14ba, 14bb) gebildet ist.

6. Radaufhängung nach Anspruch 4 oder 5, **dadurch gekennzeichnet, dass** der Ausleger (14b) in der Draufsicht gesehen nach vorne und der Fahrzeuglängsmitte zu verläuft, derart, dass die etwa vertikale Federlängsachse (32a) zwischen den beiden gedachten Verlängerungen der Schwenkachsen (18e, 18f) des unteren Lenkers (18) positioniert ist.

7. Radaufhängung nach Anspruch 6, **dadurch gekennzeichnet, dass** die gesamte Querschnittsfläche der Tragfeder (32) zwischen den besagten Schwenkachsen (18e, 18f) positioniert ist.

8. Radaufhängung nach einem oder mehreren der vorhergehenden Ansprüche, **dadurch gekennzeichnet, dass** der untere Lenker (18) und/oder der weitere Lenker (20) zum Freigang der dazwischen angeordneten Tragfeder (32) im Bereich der Tragfeder (32) entsprechend bogenförmig gestaltet ist.

9. Radaufhängung nach einem oder mehreren der vorhergehenden Ansprüche, **dadurch gekennzeichnet, dass** der Stoßdämpfer (34) mit einer bei stärkerem Durchfedern des Rades (28) wirksam werdenden Zusatzfeder (36) versehen ist und hinter der Radmittelachse (M) am Radträger (14) angelenkt ist.

10. Radaufhängung nach Anspruch 9, **dadurch gekennzeichnet, dass** der Stoßdämpfer (34) im Bereich des Auslegers (14b) des Radträgers (14) unterhalb der Radmitte (M) angelenkt ist.

11. Radaufhängung nach einem oder mehreren der vorhergehenden Ansprüche, **dadurch gekennzeichnet, dass** der Stoßdämpfer (34) zwischen 5 bis 25 Grad, insbesondere ca. 15 Grad, nach oben vorne geneigt angeordnet ist.

12. Radaufhängung nach einem oder mehreren der vorhergehenden Ansprüche, **dadurch gekennzeichnet, dass** der Stoßdämpfer (34) in der Seitenansicht gesehen vor dem äußeren, hinteren Lenkerlager (18b) des unteren Lenkers (18) und des oberen Lenkers (16) verläuft.

13. Radaufhängung nach einem oder mehreren der vorhergehenden Ansprüche, **dadurch gekennzeichnet, dass** bei angetriebenen Rädern (28) des Kraftfahrzeuges die Tragfeder (32) und der Stoßdämpfer (34) beiderseits der jeweiligen Antriebswelle (22) positioniert sind.

## Claims

1. Independent wheel suspension system for the rear wheels of motor vehicles, having a wheel carrier (14) which is articulated on at least one upper and on a lower transverse link (18), the lower transverse link (18) being articulated on the body of the motor vehicle and on the wheel carrier (14) via in each case two link bearings which form substantially horizontal pivot axes, and a link arm (14a) of the wheel carrier (14) being connected to a further link (20), having, furthermore, a bearing spring (32), which is supported on the body and on the wheel carrier, and a telescopic shock absorber (34) which is oriented substantially vertically, the further link (20) being arranged, as viewed in plan view, in the lower link plane and inclined obliquely from the outside to the inside, to the front in the driving direction, **characterized in that** the intersection point (S) of imaginary extensions of the further link (20) and of rear (as viewed in the driving direction) bearing points (18b, 18d) of the lower link (18) lies behind the extended wheel centre axis (M).

2. Wheel suspension system according to Claim 1, **characterized in that** the rear rubber-elastic bearings (18b, 18d) of the lower link (18) are configured with a greater spring stiffness than the front rubber-elastic bearings (18a, 18c).

3. Wheel suspension system according to Claims 1 and 2, **characterized in that** the front, outer bearing (18a) of the lower link (18) is positioned more closely to the wheel centre axis (M) than the rear bearings (18b, 18d).

4. Wheel suspension system according to one or more of the preceding claims, **characterized in that** the bearing spring (32) is positioned between the lower link (18) and the further link (20) in front of the wheel centre (M) and is supported on a bracket (14b) which is arranged in the lower link plane or below the latter on the wheel carrier (14).

5. Wheel suspension system according to Claim 4, **characterized in that** the bracket (14b) is formed by two struts (14ba, 14bb) which are integrally formed onto the bearing seats (14e, 14f) for the lower link (18) and are combined to form a spring seat (14bc).

6. Wheel suspension system according to Claim 4 or 5, **characterized in that,** as viewed in plan view, the bracket (14b) extends to the front and towards the vehicle longitudinal centre, in such a way that the approximately vertical spring longitudinal axis (32a) is positioned between the two imaginary extensions of the pivot axes (18e, 18f) of the lower link (18).

7. Wheel suspension system according to Claim 6, **characterized in that** the overall cross-sectional area of the bearing spring (32) is positioned between the said pivot axes (18e, 18f).

8. Wheel suspension system according to one or more of the preceding claims, **characterized in that** the lower link (18) and/or the further link (20) are/is of correspondingly arcuate design in the region of the bearing spring (32) for the free movement of the bearing spring (32) which is arranged in between.

9. Wheel suspension system according to one or more of the preceding claims, **characterized in that** the shock absorber (34) is provided with an additional spring (36) which becomes active if the wheel (28) is compressed to a relatively pronounced extent, and the said shock absorber (34) is articulated on the wheel carrier (14) behind the wheel centre axis (M).

10. Wheel suspension system according to Claim 9, **characterized in that** the shock absorber (34) is articulated in the region of the bracket (14b) of the wheel carrier (14) below the wheel centre (M).

11. Wheel suspension system according to one or more of the preceding claims, **characterized in that** the shock absorber (34) is arranged such that it is inclined upward to the front by between 5 and 25 degrees, in particular approximately 15 degrees.

12. Wheel suspension system according to one or more of the preceding claims, **characterized in that,** as viewed in side view, the shock absorber (34) extends in front of the outer, rear link bearing (18b) of the lower link (18) and of the upper link (16).

13. Wheel suspension system according to one or more of the preceding claims, **characterized in that,** in the case of driven wheels (28) of the motor vehicle, the bearing spring (32) and the shock absorber (34) are positioned on both sides of the respective drive shaft (22).

## Revendications

1. Suspension de roue indépendante pour les roues arrière de véhicules automobiles, comprenant un support de roue (14) qui est articulé au moins à un bras latéral supérieur et un bras latéral inférieur (18), le bras latéral inférieur (18) étant articulé à chaque fois par le biais de deux paliers de bras formant des axes de pivotement essentiellement horizontaux à la carrosserie du véhicule automobile et au support de roue (14), et un bras articulé (14a) du support de roue (14) étant connecté à un autre bras oscillant (20), et comprenant en outre un ressort porteur (32) supporté sur la carrosserie et sur le support de roue, et un amortisseur télescopique (34) orienté essentiellement verticalement, l'autre bras oscillant (20), en vue de dessus, étant disposé dans le plan inférieur des bras oscillants et étant disposé obliquement de l'extérieur vers l'intérieur, de manière inclinée vers l'avant dans la direction de conduite, **caractérisée en ce que** le point d'intersection (S) de prolongements imaginaires de l'autre bras oscillant (20) et de points de palier arrière (18b, 18d), vus dans la direction de conduite, du bras inférieur (18), se situant derrière l'axe médian prolongé de la roue (M).

2. Suspension de roue selon la revendication 1, **caractérisée en ce que** les paliers arrière en caoutchouc élastomère (18b, 18d) du bras inférieur (18) sont réalisés avec une plus grande dureté de ressort que les paliers avant en caoutchouc élastomère (18a, 18c).

3. Suspension de roue selon les revendications 1 et 2, **caractérisée en ce que** le palier avant extérieur (18a) du bras inférieur (18) est positionné plus près de l'axe médian de la roue (M) que les paliers arrière (18b, 18d).

4. Suspension de roue selon l'une quelconque ou plusieurs des revendications précédentes, **caractérisée en ce que** le ressort porteur (32) est positionné entre le bras inférieur (18) et l'autre bras oscillant (20) avant le centre de roue (M) et est supporté sur une potence (14b) disposée dans le plan inférieur des bras oscillants ou en dessous de celui-ci sur le support de roue (14).

5. Suspension de roue selon la revendication 4, **caractérisée en ce que** la potence (14b) est formée par deux entretoises (14ba, 14bb) moulées aux logements de palier (14e, 14f) pour le bras inférieur (18) et guidées l'une et l'autre vers un logement de ressort (14bc).

6. Suspension de roue selon la revendication 4 ou 5, **caractérisée en ce que** la potence (14b), en vue de dessus, s'étend vers l'avant et vers le milieu longitudinal du véhicule, de telle sorte que l'axe longitudinal du ressort (32a) approximativement vertical, soit positionné entre les deux prolongements imaginaires des axes de pivotement (18e, 18f) du bras inférieur (18).

7. Suspension de roue selon la revendication 6, **caractérisée en ce que** la totalité de la surface en section transversale du ressort porteur (32) est positionnée entre lesdits axes de pivotement (18e, 18f).

8. Suspension de roue selon l'une quelconque ou plusieurs des revendications précédentes, **caractérisée en ce que** le bras inférieur (18) et/ou l'autre bras oscillant (20) sont réalisés sous forme arquée de manière correspondante dans la région du ressort porteur (32) pour libérer l'accès au ressort porteur (32) disposé entre eux.

9. Suspension de roue selon l'une quelconque ou plusieurs des revendications précédentes, **caractérisée en ce que** l'amortisseur (34) est pourvu d'un ressort supplémentaire (36) devenant actif en cas d'une suspension plus forte de la roue (28), et est articulé au support de roue (14) derrière l'axe médian de la roue (M).

10. Suspension de roue selon la revendication 9, **caractérisée en ce que** l'amortisseur (34) est articulé dans la région de la potence (14b) du support de roue (14) sous le centre de la roue (M).

11. Suspension de roue selon l'une quelconque ou plusieurs des revendications précédentes, **caractérisée en ce que** l'amortisseur (34) est disposé de manière inclinée vers l'avant et vers le haut entre 5 et 25 degrés, notamment à environ 15 degrés.

12. Suspension de roue selon l'une quelconque ou plusieurs des revendications précédentes, **caractérisée en ce que** l'amortisseur (34), en vue de côté, s'étend avant le palier de bras extérieur arrière (18b) du bras inférieur (18) et du bras supérieur (16).

13. Suspension de roue selon l'une quelconque ou plusieurs des revendications précédentes, **caractérisée en ce que** lorsque les roues (28) du véhicule automobile sont entraînées, le ressort porteur (32) et l'amortisseur (34) sont positionnés de chaque côté de l'arbre d'entraînement respectif (22).
